# EUROPEAN PATENT APPLICATION

(11) **EP 2 927 061 A1**
(43) Date of publication of application: **07.10.2015**
(21) Application number: 15160663.9
(22) Date of filing: 24.03.2015
(51) Int. Cl.: B60R 25/20, B60R 25/24

(54) **CONTROL SYSTEM AND OPERATION METHOD FOR VEHICLE**

(30) Priority: 31.03.2014 TW 103112050
(71) Applicant: Hon Hai Precision Industry Co., Ltd., New Taipei City (TW)
(72) Inventor: LIN, Mao-Yu, New Taipei City (TW); CHEN, Hsin-Nan, New Taipei City (TW); HUANG, Chia-Jou, New Taipei City (TW); CHEN, Wei-An, New Taipei City (TW)
(74) Representative: Huang, Chongguang

(57) **Abstract**

A control system for vehicle includes a function controller (30), a key (20) pairing with the function controller (30) and taking control of the function controller. A portable device (10) broadcasts an instruction to the key (20) and if the pairing is validated, the device (10) pairs with the key (10). The key (20) can receive instructions and have the function controller (30) control the vehicle according to instructions. The present disclosure also discloses an operation method of a control system for vehicle.

## Description

### FIELD

The subject matter herein generally relates to security for vehicles via wireless communications.

### BACKGROUND

Many vehicles are sold with remote keyless ignition systems. Remote keyless ignition systems allow individuals to start an ignition of an vehicle from a short distance away from the vehicle, eliminating the need to physically manipulate a key into the ignition of the vehicle. Some vehicles with remote keyless ignition systems can be started by the push of a button on a small, hand-held fob, i.e., a small transmitter, attached to a driver's key ring. Other vehicles have a proximity system that is triggered if a key-like transducer is within a certain distance of the vehicle.

A remote keyless ignition system uses a coded Radio Frequency Identification (RFID) chip. The remote keyless ignition system operates on a radio frequency signal being emitted from the vehicle and received by a fob. The fob would then send a response to the vehicle to start the vehicle.

### SUMMARY

According to one aspect of the disclosure, a control system for vehicle can include a portable device, a key, and a function controller. The portable device can send out a first identification code, the key receives and identifies the first identification code. The portable device can pair with the key, if the first identification code is right. Then the key sends a second identification code, and the function controller receives and identifies the second identification code. The function controller can pair with the key, if the second identification code is right. The portable device can broadcast an instruction to the key, and the key receives the broadcast instruction, and passes the instruction on to the function controller. The function controller controls the vehicle or parts of it according to the instruction.

### BRIEF DESCRIPTION OF THE DRAWINGS

Implementations of the present technology will now be described, by way of example only, with reference to the attached figures.
FIG. 1 is a block diagram of an embodiment of a control system for vehicle.
FIG. 2 is a flow diagram of a process for an operation method of the control system for vehicle.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein.

Several definitions that apply throughout this disclosure will now be presented.

The term "comprising", when utilized, means "including, but not necessarily limited to"; it specifically indicates open-ended inclusion or membership in the so-described combination, group, series and the like.

The present disclosure describes a control system for vehicle.

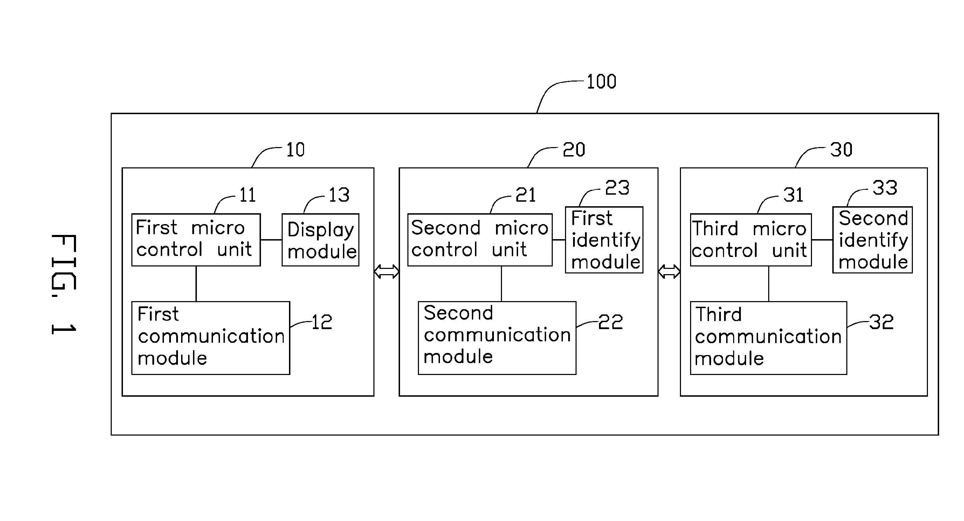

FIG. 1 illustrates an embodiment of a control system 100 for vehicle. The control system 100 can include a portable device 10, a key 20, and a function controller 30. The key 20 can be configured for pairing with the function controller 30 and controlling the function controller 30. The portable device10 can pair with the key 20 and send out an instruction to the key 20. Then, the key 20 receives the instruction and has the function controller 30 control the vehicle or parts of the vehicle according to the instruction.

The portable device 10 can send out a first identification code to the key 20. The portable device 10 can include a first micro control unit (MCU) 11, and a first communication module 12 is electrically connected to the first micro control unit 11. The first micro control unit 11 can provide memory and operative functions for the portable device 10. The first communication module 12 can broadcast the instruction and the first identification code to the key 20 by radio, and the first communication module 12 can be controlled by the first micro control unit 11.

In other embodiments, the portable device 10 can include a plurality of micro control units and a plurality of communication modules. In operation, the portable device 10 can include software application (APP), and the application can drive the portable device 10.

The portable device 10 further includes a display module 13 electrically connected to the first micro control unit 11. The display module 13 can include a screen configured to show the instruction and the first identification code. The instruction which is broadcast can be shown on the screen, so it is convenient to know the broadcast instruction. In some embodiments, the screen can be a touch screen, and the instruction to be broadcast can be input into the portable device 10 by writing on the touch screen.

The key 20 can be wirelessly connected to the portable device 10 and the function controller 30. The key 20 can include a second micro control unit 21, and a second communication module 22 electrically connected to the second micro control unit 21. The second micro control unit 21 can provide memory and operative functions for the key 20. In operation, the second communication module 22 can be wirelessly connected to the first communication module 12 by 3rd generation (3G), 4the generation (4G), BLUETOOTH, Wireless-Fidelity (WI-FI), or the like. In other embodiments, the key 20 can include a plurality of micro control units and a plurality of communication modules.

The key 20 further includes a first identity module 23 electrically connected to the second micro control unit 21. The first identity module 23 can identify the first identification code emitted from the first communication module 12 of the portable device 10. When the first identification code is validated, the key 20 can pair with the portable device 10. Otherwise, the key 20 cannot pair with the portable device 10. After the key 20 paired with the portable device 10, the second communication module 22 can send out a second identification code and the instruction to the function controller 30. The key 20 can be received in the portable device 10.

In operation, the second communication module 22 can receive the first identification code emitted from the first communication module 12, the first identification code can then be transmitted to second micro control unit 21 to be entered into the first identity module 23.

The function controller 30 can include a third micro control unit 31, a third communication module 32 , and a second identity module 33. The third communication module 32 and the second identity module 33 can be electrically connected to the third micro control unit 31. The third micro control unit 31 can provide memory and operative functions for the function controller 30. In other embodiments, the function controller 30 can include a plurality of micro control units and a plurality of communication modules.

The third communication module 32 can be wirelessly connected to the second communication module 22 by general packet radio service (GPRS) protocol. In other embodiments, the third communication module 32 can be wirelessly connected to the second communication module 22 by WI-FI.

The second identity module 33 can be similar to the first identity module 23. In operation, the third communication module 32 can receive the second identification code emitted from the second communication module 22, and the second identification code can be transmitted to third micro control unit 31 to be entered into the second identity module 33.

The function controller 30 can be assembled to the vehicle, and can activate the vehicle or parts of it according to instructions emitted from the second communication module 22. In some embodiments, the function controller 30 can control of an engine, a vehicle door lock, and other working parts.

In some embodiments, the portable device 10 can be a mobile phone, a notebook computer, or a tablet personal computer (Tablet PC).

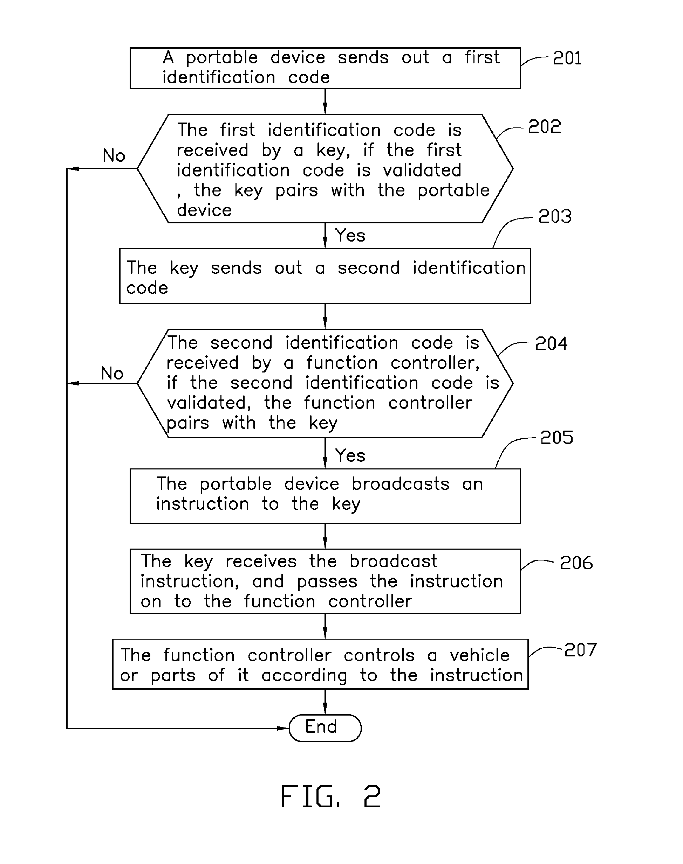

FIG. 2 illustrates a method for using the control system 100, which can include the following.

In block 201, the portable device 10 can send out a first identification code.

In block 202, the first identification code can be received by the key 20, if the first identification code is validated, the key 20 can pair with the portable device 10.

In block 203, the key 20 can send out a second identification code.

In block 204, the second identification code can be received by the function controller 30. If the second identification code is validated, the function controller 30 can pair with the key 20.

In block 205, the portable device 10 can broadcast an instruction to the key 20.

In block 206, the key 20 can receive the broadcast instruction, and pass the instruction on to the function controller 30.

In block 207, the function controller 30 can control the vehicle or parts of it according to the instruction.

The control system 100 requires a pairing process to happen twice. Firstly, the portable device 10 for pairing with the key 20 and secondly, the key 20 for pairing with the function controller 30. The control system 100 can control the vehicle or parts of it only if the two pairing processes are achieved, so safety and security factors of the vehicle can be improved.

The embodiments shown and described above are only examples. Many details are often found in the art such as the other features of a control system for vehicle. Therefore, many such details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims. It will therefore be appreciated that the embodiments described above may be modified within the scope of the claims.

## Claims

1. A control system for a vehicle comprising:
a function controller, and
a key for pairing with the function controller and controlling the function controller;
wherein a portable device pairs with the key and sends out an instruction to the key; and
wherein the key receives the instruction and has the function controller control the vehicle or parts of the vehicle according to the instruction.

2. The control system as claimed in claim 1, wherein the portable device comprises a first micro control unit, and a first communication module electrically connected to the first micro control unit.

3. The control system as claimed in claim 2, wherein the first communication module broadcasts the instruction and a first identification code to the key by radio.

4. The control system as claimed in claim 3, wherein the key comprises a first identity module configured to identify the first identification code emitted from the first communication module.

5. The control system as claimed in claim 3, wherein the portable device comprises a display module electrically connected to the first micro control unit.

6. The control system as claimed in claim 5, wherein and the display module comprises a screen configured to show the instruction and the first identification code.

7. The control system as claimed in claim 1, wherein the key comprises a second micro control unit, and a second communication module electrically connected to the second micro control unit.

8. The control system as claimed in claim 7, wherein the second communication module sends out a second identification code and the instruction to the function controller.

9. The control system as claimed in claim 8, wherein the key further comprises a second identity module configured to identify the second identification code emitted from the key.

10. The control system as claimed in claim 1, wherein the function controller comprises a third micro control unit, and a third communication module electrically connected to the third micro control unit.

11. The control system as claimed in claim 1, wherein the key is received in the portable device.

12. The control system as claimed in claim 1, wherein the function controller is assembled to the vehicle.

13. The control system as claimed in claim 1, wherein the key is wirelessly connected to the function controller by general packet radio service.

14. An operation method of a control system for a vehicle, comprising:
a portable device sends out a first identification code;
a key receives and identifies the first identification code;
the key sends a second identification code;
a function controller receives and identifies the second identification code;
the portable device broadcasts an instruction to the key;
the key receives the broadcast instruction, and passes the instruction on to the function controller; and
the function controller controls the vehicle or parts of it according to the instruction.
